Europäisches Patentamt

European Patent Office

Office européen des brevets

(11) Veröffentlichungsnummer: **0 278 037**
**B1**

(12) **EUROPÄISCHE PATENTSCHRIFT**

(45) Veröffentlichungstag der Patentschrift:
**14.11.90**

(21) Anmeldenummer: **87102010.3**

(22) Anmeldetag: **13.02.87**

(51) Int. Cl.⁵: **G01M 1/04, G01M 1/06,
G01M 1/30, G01M 1/24**

(54) Maschine zum Wuchtzentrieren von Umlaufkörpern.

(43) Veröffentlichungstag der Anmeldung:
**17.08.88 Patentblatt 88/33**

(45) Bekanntmachung des Hinweises auf die Patenterteilung:
**14.11.90 Patentblatt 90/46**

(84) Benannte Vertragsstaaten:
**DE ES FR GB IT SE**

(56) Entgegenhaltungen:
**DE-B- 875 734
DE-C- 975 086
US-A- 1 665 866
US-A- 2 329 835
US-A- 2 693 695
US-A- 4 545 247**

**Die Automobilindustrie und Schenck (Druckschrift
B 1112-20.478 A, Carl Schenck AG, Darmstadt)**

**Die Akte enthält technische Angaben, die nach dem
Eingang der Anmeldung eingereicht wurden und die
nicht in dieser Patentschrift enthalten sind.**

(73) Patentinhaber: **Carl Schenk AG,
Landwehrstrasse 55 Postfach 40 18,
D-6100 Darmstadt(DE)**

(72) Erfinder: **Schönfeld, Harald, Aumühlenweg 1,
D-6100 Darmstadt 12(DE)**

(74) Vertreter: **Brandt, Ernst-Ulrich, Fa. Carl Schenck AG
Patentabteilung Landwehrstrasse 55 Postfach 40 18,
D-6100 Darmstadt 1(DE)**

## Beschreibung

Die Erfindung bezieht sich auf eine Maschine nach dem Oberbegriff des Patentanspruchs 1.

Derartige Maschinen dienen zum Wuchtzentrieren eines Umlaufkörpers, wobei beim Wuchtzentrieren die Schaftachse des Körpers entweder in die Hauptträgheitsachse (Massenachse) gelegt oder gezielt in eine ausgleichsgünstige Achse verschoben wird. Insbesondere bei Kurbelwellen ist dieses Verfahren üblich, da hier die Ausgleichsmöglichkeiten - im allgemeinen an den Gegengewichten - begrenzt sind und weil die Gegengewichte als vorausbestimmte Kompensation gegenüber den auf die Welle wirkenden Massenkräften möglichst unverändert erhalten bleiben sollen.

Bei einer ersten, beispielsweise aus der DE-PS 975 086 bekannten Bauart von Wuchtzentriermaschinen wird der Kurbelwellenrohling in einem gegenüber dem Maschinenbett federnd abgestützten, dreh- und schwingfähigen Auswuchtkäfig aufgenommen. In den beiden Zapfen des Käfigs ist je eine Bohrspindel zum Anbringen der Zentriermarken gelagert. Der Käfig weist zwei Aufnahmescheiben auf, die durch Längsholme miteinander verbunden sind. Der Käfig ist ausgewuchtet und bekommt mit dem Einbringen des Kurbelwellenrohlings eine Unwucht, die durch Verschieben der Welle im umlaufenden Käfig zum Verschwinden gebracht wird. Zur Aufnahme unterschiedlich langer Kurvelwellenrohlinge ist diese Maschine nicht vorgesehen; allenfalls mit den auf den Aufnahmescheiben angeordneten Aufnahme- und Verstelleinrichtungen lassen sich in begrenztem Umfang unterschiedlich lange Kurbelwellenrohlinge aufnehmen.

Aus der Druckschrift "Die Automobilindustrie und Schenck" (Druckschrift B 1112-20.478 A, Carl Schenck AG, Darmstadt) ist eine Maschine der eingangs genannten Art zum Wuchtzentrieren von Umlaufkörpern in Form von Kurbelwellenrohlingen bekannt, bei der zwei Lagerköpfe über am Lagerkopf und am Maschinenbett verschraubte Federn gegen das Maschinenbett abgestützt sind. Die Lagerköpfe weisen - in Längsrichtung der Maschine gesehen - etwa quadratische Abmessungen auf und sind über vier an den Ecken des Quadrats angeordnete Säulen und Klemmeinrichtungen miteinander verbunden. Innerhalb des durch die Säulen bestimmten Innenraums sind Aufnahmescheiben vorgesehen, die synchron drehbewegbar sind und die jeweils in einem Lagerkopf gelagert sind. An den den Lagerköpfen abgewandten Stirnseiten tragen die Aufnahmescheiben über Verstellgetriebe betätigbare Klemmstücke und Gegenhalter, zwischen die die Kurbelwellenendabschnitte einsetzbar sind. Über die jeweils zwei Verstellgetriebe pro Aufnahmescheibe kann jedes Kurbelwellenende aus der Rotationsachse der Aufnahmescheiben in zwei verschiedene Richtungen verschoben werden und z. B. die Schaftachse zur Deckung mit der Hauptträgheitsachse gebracht werden. Die Einrichtung zum Anbringen der Zentrierung steht separat auf dem Maschinenbett.

Die aus letztgenannter Druckschrift bekannte Maschine ist für eine schnelle Verstellung auf unterschiedlich lange Umlaufkörper im Rahmen einer flexiblen Fertigung wenig geeignet, da bei einer Verstellung eine Vielzahl von Verbindungen zwischen den Bauteilen gelöst werden muß; die Lagerköpfe und die Einrichtungen zum Anbringen von Zentriermarken müssen zudem separat verschoben und arretiert werden.

Der Erfindung liegt die Aufgabe zugrunde, eine Maschine der eingangs genannten Art zu schaffen, die unter Si cherstellung eines großen Verstellbereichs schnell und mit einfachen Mitteln an unterschiedliche Längen des Umlaufkörpers anpaßbar ist.

Erfindungsgemäß wird diese Aufgabe dadurch gelöst, daß die Lagerköpfe über zumindest eine Führungsschiene, auf der bzw. denen die Lagerköpfe, von denen zumindest einer längsverschiebbar ist, aufliegen und befestigt sind, zu einer Schwingbrücke verbunden sind, daß die zur Abstützung dienenden Federn zwischen Führungsschiene bzw. Führungsschienen und Maschinenbett angeordnet sind, und daß Lagerkopf und Einrichtung zum Anbringen der Zentriermarke eine gemeinsam verschiebbare Baueinheit bilden. Mit dieser Ausgestaltung wird eine schnelle und einfache, automatisierbare Einstellung der Maschine auf unterschiedlich lange Umlaufkörper ermöglicht, da die Einstellung lediglich das Lösen der Befestigung eines Lagerkopfes, seine Verschiebung und seine anschließende Befestigung mit z. B. einer Klemmeinrichtung erfordert. Es entfällt das Lösen und Wiederbefestigen weiterer Verbindungen, wie z. B. der Federanlenkungen am Maschinenbett und der Verbindungen von Längssäulen mit den Lagerköpfen sowie der Verbindungen der Einrichtungen zum Anbringen von Zentriermarken am Maschinenbett. Eine gegenseitige Verspannung von Bauteilen der Maschine, die daraus resultiert, daß Verbindungen gelöst und nach Verschiebung ohne ausreichende Justierung wiederhergestellt werden, tritt aufgrund der erfindungsgemäßen Ausgestaltung nicht ein; die Gefahr der Beeinträchtigung der Maschinenfunktion, insbesondere der Funktion der Meßeinrichtungen, durch Verspannungen ist damit in vorteilhafter Weise unterbunden. Der Raum zwischen den Lagerköpfen ist frei von die Einlagerung der Umlaufkörper behindernden Verbindungssäulen für die Lagerköpfe.

Besonders vorteilhaft in Hinsicht auf die Einlagerung ist eine Weiterbildung der Erfindung, bei der die Füh rungsschiene bzw. die Führungsschienen auf einer Seite einer Ebene durch die Rotationsachse der Aufnahmescheiben, vorzugsweise unterhalb der Horizontalebene durch die Rotationsachse, angeordnet sind. Damit wird erreicht, daß auf einer Seite der Ebene keine Bauteile der Maschine, die die Einlagerung des Umlaufkörpers behindern könnten, angeordnet sind. Die Ebene kann dabei aus ergonomischen Gründen z. B. um 45° zur Horizontalebene geneigt sein.

Eine Ausführungsform der Erfindung, bei der zwei Führungsschienen über Querelemente zu einem Rahmen mit in vorzugsweise einer gemeinsamen Horizontalebene verlaufenden Auflageflächen für die schlittenförmig ausgebildeten Lagerköpfe verbunden sind, zeichnet sich durch einen einfachen Aufbau und eine große Stabilität aus. Es ist dabei zweckmäßig, daß am Rahmen eine vorzugsweise mechanische Verschiebeeinrichtung für die aus Lagerkopf und Einrichtung zum Anbringen der Zentriermarke gebildete, gemeinsam verschiebbare Baueinheit abgestützt ist.

Einen einfachen und robusten Antrieb der Aufnahmescheiben erhält man mit einer Ausgestaltung, bei der beide Aufnahmescheiben von einem gemeinsamen Motor angetrieben werden, wobei der Motor über eine in den Querelementen des Rahmens gelagerte Welle mit den Aufnahmescheiben in Wirkverbindung steht. Besonders vorteilhaft ist eine Weiterbildung, bei der die Welle über Riementriebe einerseits mit dem Motor und andererseits mit den Aufnahmescheiben verbunden ist, da dabei kaum Fremdschwingungen verursacht werden.

In einer weiteren Ausgestaltung ist vorgesehen, daß die Aufnahmescheibe einen hohlzylindrischen Abschnitt aufweist, mit dem sie auf einem zapfenförmigen Fortsatz des Lagerkopfes drehbar gelagert ist. Vorteile in Hin sicht auf eine einfache Verstellung des Lagerkopfs bietet eine Ausführungsform, bei der der Riementrieb zwischen Welle und Aufnahmescheibe eine an der Aufnahmescheibe ausgebildete ringbundförmige Riemenlauffläche und eine im Lagerkopf drehbar gelagerte, axial festgelegte Riemenscheibe umfaßt, die eine einem profilierten Abschnitt der Welle zugeordnete profilierte Bohrung aufweist und die infolge Längsverschiebung des Lagerkopfes auf der Welle axial verschiebbar ist.

Ferner ist vorgesehen, daß der Lagerkopf eine zentral durch den zapfenförmigen Fortsatz verlaufende Durchgangsbohrung aufweist, die Teile der Einrichtung zum Anbringen der Zentriermarke umgibt.

Zweckmäßig ist dabei eine Ausbildung, bei der in der Durchgangsbohrung eine Hülse axial verschiebbar und drehfest gelagert ist, in der ein motorgetriebener Zentrierbohrer drehbar gelagert und axial abgestützt ist.

Ausführungsformen der Erfindung sind in der Zeichnung dargestellt und werden im folgenden näher erläutert. Es zeigen:

Fig. 1 eine Teilschnittdarstellung einer Wuchtzentriermaschine,

Fig. 2 eine Schnittdarstellung längs der Linie I-I in Fig. 1

Einander entsprechende Bauteile sind in den Figuren mit gleichen Bezugszeichen versehen.

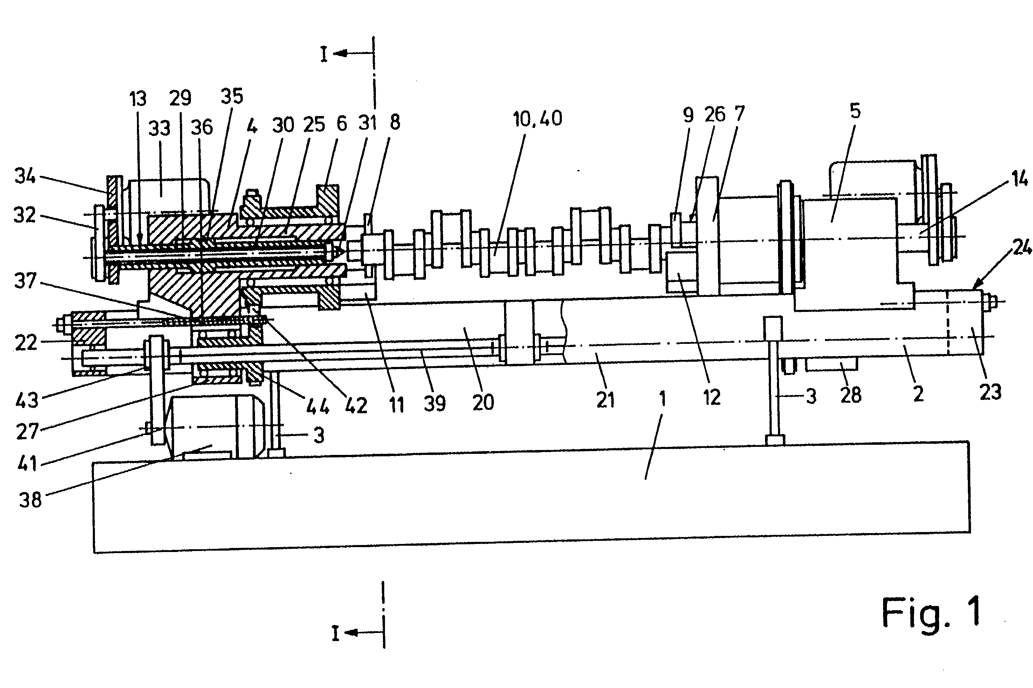

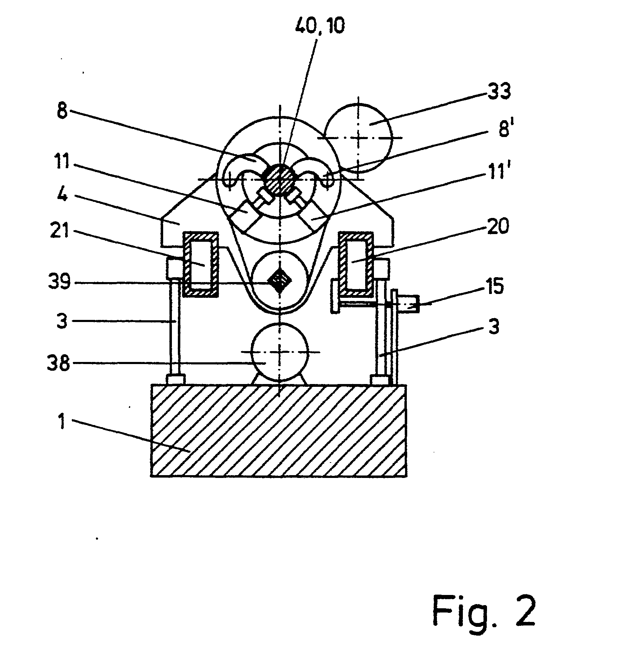

In Fig. 1 ist mit 1 das Maschinenbett einer Wuchtzentriermaschine bezeichnet, die ferner eine Schwingbrücke 2 umfaßt, die über Federn 3 am Maschinenbett 1 abgestützt ist. Zur Aufnahme der durch die Unwucht des Umlaufkörpers hervorgerufenen Schwingungen der Schwing brücke 2 sind Schwingungsaufnehmer 15 (Fig. 2) am Maschinenbett 1 montiert. Auf der Schwingbrücke 2 sind Lagerköpfe 4 und 5 angeordnet, an denen Aufnahmescheiben 6 und 7 drehbar gelagert sind. Die Aufnahmescheiben 6 und 7 weisen Aufnahmeeinrichtungen 8 und 9 zur Einlagerung der Endbereiche eines Umlaufkörpers 40 in Form eines Kurbelwellenrohlings 10 auf, der mit der Maschine wuchtzentriert werden soll. Den Aufnahmeeinrichtungen 8 und 9 sind Verstelleinrichtungen 11 und 12 zugeordnet. Über die jedem Lagerkopf 4, 5 zugeordneten Aufnahme- und Verstelleinrichtungen 8, 9 bzw. 11, 12 läßt sich während der Rotation der Aufnahmescheiben 6, 7 die Schaftachse des Kurbelwellenrohlings 10 zur Rotationsachse der Maschine, die durch die zueinander fluchtenden Achsen der Lagerköpfe 4, 5 bzw. der Aufnahmescheiben 6, 7 festgelegt ist, parallel verschieben und neigen. Ist die Verstellung der Schaftachse beendet, so werden mit den Einrichtungen 13, 14 zum Anbringen der Zentriermarken Zentrierbohrungen in den Stirnflächen des Kurbelwellenrohlings 10 angebracht. Nach Anbringen der Zentrierbohrungen wird der wuchtzentrierte Kurbelwellenrohling 10 aus der Maschine genommen und einer Bearbeitungseinrichtung sowie einer Auswuchteinrichtung zugeführt.

Die Schwingbrücke 2 weist zwei in Längsrichtung der Maschine, d. h. in Richtung der unverschobenen Schaftachse des Umlaufkörpers 10 bzw. der Rotationsachse der Aufnahmescheiben 6, 7 sich erstreckende Führungsschienen 20, 21 auf, die über Querelemente 22, 23 zu einem im wesentlichen ebenen, rechteckförmigen Rahmen 24 verbunden sind. An jeder Führungsschiene 20, 21 sind zwei in Längsrichtung einen Abstand aufweisende Federn 3 befestigt, deren andere Enden am Maschinenbett 1 befestigt sind. Die Führungschienen 20, 21 liegen in einer Horizontalebene, die unterhalb der Rotationsachse der Maschine verläuft.

Die Führungsschienen 20, 21 sind in diesem Ausführungsbeispiel durch Rohre mit Rechteckquerschnitt gebildet und weisen Auflageflächen auf, auf denen die schlittenförmigen Lagerköpfe 4 und 5 in Vertikalrichtung abgestützt aufliegen. Bereiche der Lagerköpfe 4 und 5 sind gegen Vertikalflächen der Rohre anlegbar, so daß die Lagerköpfe 4 und 5 gegen Verschiebung in Querrichtung gesichert sind.

Die schlittenförmigen Lagerköpfe 4 und 5 sind beide auf den Führungsschienen 20, 21 der Schwingbrücke 2 bzw. des Rahmens 24 in Längsrichtung verschiebbar und gegenüber dem Rahmen 24 durch z. B. Klemmeinrichtungen arretierbar. Jeder Lagerkopf 4, 5 weist einen zylindrischen Fortsatz 25, 26 auf sowie einen nach unten zwischen die Führungsschienen 20, 21 ragenden Ansatz 27, 28. Auf dem zylindrischen Fortsatz 25, 26 sind über Wälzlager die Aufnahmescheiben 6, 7 drehbar gelagert und in axialer Richtung festgelegt. Der Abstand der Mitte der zylindrischen Fortsätze 25, 26 zu den den Führungsschienen 20, 21 zugeordneten Auflageflächen ist im wesentlichen durch die maximale Auslenkung und die Kurbelgeometrie des Kurbelwellenrohlings 10 bestimmt. In Längsrichtung erstreckt sich durch den Lagerkopf 4, 5 jeweils eine zentrisch zum Fortsatz 25, 26 verlaufende Durchgangsbohrung, von denen nur die Durchgangsbohrung 29 am Lagerkopf 4 im Teilschnitt dargestellt ist. Die Durchgangsbohrungen 29 nehmen Bauteile der Einrichtungen 13, 14 zum Anbringen der Zentriermarken auf.

Die Einrichtungen 13, 14 umfassen, wie aus der Teilschnittdarstellung in Fig. 1 ersichtlich, einen in einer Hülse 30 drehbar gelagerten und an der Hülse 30 in Axialrichtung abgestützten Zentrierbohrer 31, der an seinem aus der Hülse 30 und dem Lagerkopf 4 bzw. 5 her ausragenden Ende über einen Riementrieb 32 von einem Motor 33 angetrieben ist.

Die Hülse 30 ist in der durchgehenden Bohrung 29 des Lagerkopfs 4, 5 verschiebbar und ragt mit einem Endbereich aus der der Aufnahmescheibe 6 bzw. 7 abgewandten Seite aus dem Lagerkopf 4 bzw. 5 heraus. An diesem Ende ist an der Hülse 30 ein Lagerschild 34 befestigt, das den Motor 33 zum Antrieb des Zentrierbohrers 31 mit der dem Motor 33 zugeordneten Riemenscheibe trägt. Die Hülse 30 weist eine Bohrung zur Aufnahme des Zentrierbohrers 31 auf. Am Außenumfang ist sie mit einem Ringbund 35 versehen, der abgedichtet in einem Abschnitt größeren Durchmessers der Durchgangsbohrung 29 geführt ist. Durch Druckbeaufschlagung der abgedichteten Durchgangsbohrungsabschnitte läßt sich zum Anbringen einer Zentrierbohrung die Hülse 30 mit dem Zentrierbohrer 31 in Richtung Kurvelwellenrohling 10 aus der Durchgangsbohrung 29 herausbewegen oder in die Durchgangsbohrung 29, d. h. in die Ruhelage, zurückbewegen. Auch elektromotorisches Verschieben der Hülse 30 ist möglich.

In dem nach unten ins Innere des Rahmens 24 ragenden Ansatz 27, 28 des Lagerkopfs 4, 5 ist eine mit einem Gewinde versehene Durchgangsöffnung ausgebildet, die als Schloßmutter 36 für eine sie durchsetzende Gewindespindel 37 dient, welche axial am Querelement 22 bzw. 23 des Rahmens 24 arretiert ist. Die durch die Länge des Kurvelwellenrohlings 10 sich ergebende Stellung des Lagerkopfes 4, 5 wird über die Gewindeeinrichtung durch Verdrehen der Gewindespindel 37 eingestellt und anschließend über eine nicht dargestellte Klemmeinrichtung, die den Lagerkopf 4 bzw. 5 gegen die Führungsschienen 20, 21 preßt, verriegelt. Das Verdrehen der Gewindespindel 37 kann auch durch einen Servomotor erfolgen. Ferner können beide Lagerköpfe gemeinsam durch Verstellung einer beiden Lagerköpfen gemeinsamen Gewindespindel verstellt werden.

Im Ansatz 27, 28 des Lagerkopfes 4, 5 ist ferner ein Element des Drehantriebs der Aufnahmescheiben 6, 7 gelagert. Der synchrone Antrieb beider Aufnahmescheiben 6, 7 erfolgt im dargestellten Ausführungsbeispiel von einem auf dem Maschinenbett 1 befestigtem Motor 38 über einen Riementrieb 41, eine Welle 39 und einen für jede Aufnahmescheibe 6, 7 vorgesehenen Riementrieb 42. Der Motor 38 kann auch am Rahmen 24, d. h. an der Schwingbrücke 2 befestigt sein.

Die Welle 39 ist in den Querelementen 22 und 23 des Rahmens 24 drehbar gelagert. Zur Übertragung der Motorantriebskraft auf die Welle 39 ist mit dieser eine Riemenscheibe 43 für den Riementrieb 41 drehfest verbunden. Auf der Welle 39 ist längsverschieblich und drehstarr jeweils eine hülsenförmige Riemenscheibe 44 als Teil des Riementriebs 42 zwischen Welle 39 und Aufnahmescheibe 6 bzw. 7 angeordnet. Die Riemenscheibe 44 weist eine profilierte Innenbohrung auf, die einem entsprechenden Profilabschnitt der Welle 39 zugeordnet ist. Am Außenumfang weist die Riemenscheibe 44 eine Riemenlauffläche und eine Lagerfläche auf, mit der die Riemenscheibe 44 über Wälzlager in einer Bohrung des Ansatzes 27, 28 im Tragkopf 4, 5 drehbar angeordnet ist. Die Riemenscheibe 44 ist in axialer Richtung in der Bohrung festgelegt. Der Riemenlauffläche an dieser Riemenscheibe 44 ist eine Riemenlauffläche an der Aufnahmescheibe 6, 7 zugeordnet.

Die Aufnahmescheiben 6, 7 weisen jeweils auf ihrer dem Lagerkopf 4, 5 abgewandten Stirnseite Aufnahme- und Verstelleinrichtungen 8, 9 bzw. 11, 12 auf, die zur Einlagerung der Kurvelwellenenden und zur Verstellung der Schaftachse des Kurbelwellenrohlings 10 dienen. Für jede Verstellebene, d. h. für jede Aufnahmescheibe 6, 7 sind, wie aus Fig. 2 ersichtlich, zwei Motoren 11, 11' bzw. 12, 12' als Verstelleinrichtungen 11, 12 und zwei federnd gegen die Verstelleinrichtung 11, 12 vorgespannte Gegenhalter 8, 8' bzw. 9, 9' als Aufnahmeeinrichtung 8, 9 vorgesehen, um den Kurbelwellenrohling 10 entsprechend den gemessenen Unwuchten bei synchroner Rotation der Aufnahmescheiben 6, 7 solange räumlich zu verstellen, bis die Unwucht verschwindet bzw. bis eine vorgegebene Unwucht erreicht ist.

Nach Einstellen der erforderlichen räumlichen Lage der Schaftachse des Kurbelwellenrohlings 10 werden die beiden Zentrierbohrer 31 synchron in ihrer Arbeitsstellung bewegt und bringen die die räumliche Lage der Schaftachse bestimmenden Zentrierbohrungen in den Stirnflächen des Kurbelwellenrohlings 10 an; der Wuchtzentriervorgang ist damit abgeschlossen.

## Patentansprüche

1. Maschine zum Wuchtzentrieren von Umlaufkörpern (40), insbesondere von Kurbelwellen (10), mit einem Maschinenbett (1), mit zwei über Federn (3) gegen das Maschinenbett (1) abgestützten, miteinander zu einer Schwingbrücke (2) verbundenen Lagerköpfen (4, 5) für synchron rotierende, Aufnahme- und Verstelleinrichtungen (8, 9; 11, 12) für den zu zentrierenden Umlaufkörper (40) aufweisende Aufnahmescheiben (6, 7), sowie mit zwei in Längsrichtung im wesentlichen hinter den Lagerköpfen (4, 5) angeordneten Einrichtungen (13, 14) zum Anbringen von Zentriermarken an den Enden des Umlaufkörpers (40), dadurch gekennzeichnet, daß die Lagerköpfe (4, 5) über zumindest eine Führungsschiene, auf der bzw. denen die Lagerköpfe (4, 5), von denen zumindest einer längs verschiebbar ist, aufliegen und befestigt sind, zu einer Schwingbrücke (2) verbunden sind, daß die zur Abstützung dienenden Federn (3) zwischen Führungsschiene bzw. Führungsschienen (20, 21) und Maschinenbett (1) angeordnet sind, und daß Lagerkopf (4, 5) und Einrichtung (13, 14) zum Anbringen der Zentriermarke eine gemeinsam verschiebbare Baueinheit bilden.

2. Maschine nach Anspruch 1, dadurch gekennzeichnet, daß die Führungsschiene bzw. die Führungsschienen (20, 21) auf einer Seite einer Ebene durch die Rotationsachse der Aufnahmescheiben (6, 7), vorzugsweise unterhalb der Horizontalebene durch die Rotationsachse, angeordnet sind.

3. Maschine nach einem oder beiden der vorhergehenden Ansprüche, dadurch gekennzeichnet, daß zwei Führungsschienen (20, 21) über Querelemente (22, 23) zu einem Rahmen (24) mit in vorzugsweise einer ge meinsamen Horizontalebene verlaufenden Auflageflächen für die schlittenförmig ausgebildeten Lagerköpfe (4, 5) verbunden sind.

4. Maschine nach Anspruch 3, dadurch gekennzeichnet, daß am Rahmen (24) eine vorzugsweise mechanische Verschiebeeinrichtung (37) für die aus Lagerkopf (4, 5) und Einrichtung (13, 14) zum Anbringen der Zentriermarke gebildete, gemeinsam verschiebbare Baueinheit abgestützt ist.

5. Maschine nach einem oder mehreren der vorhergehenden Ansprüche, dadurch gekennzeichnet, daß beide Aufnahmescheiben (6, 7) von einem gemeinsamen Motor (38) angetrieben werden, wobei der Motor (38) über eine in den Querelementen (22, 23) des Rahmens (24) gelagerte Welle (39) mit den Aufnahmescheiben (6, 7) in Wirkverbindung steht.

6. Maschine nach Anspruch 5, dadurch gekennzeichnet, daß die Welle (39) über Riementriebe (41, 42) einerseits mit dem Motor (38) und andererseits mit den Aufnahmescheiben (6, 7) verbunden ist.

7. Maschine nach einem oder mehreren der vorhergehenden Ansprüche, insbesondere nach Anspruch 6, dadurch gekennzeichnet, daß die Aufnahmescheibe (6, 7) einen hohlzylindrischen Abschnitt aufweist, mit dem sie auf einem zapfenförmigen Fortsatz (25, 26) des Lagerkopfs (4, 5) drehbar gelagert ist.

8. Maschine nach Anspruch 7, dadurch gekennzeichnet, daß der Riementrieb (42) zwischen Welle (39) und Aufnahmescheibe (6, 7) eine an der Aufnahmescheibe (6, 7) ausgebildete ringbundförmige Riemenlauffläche und eine im Lagerkopf (4, 5) drehbar gelagerte, axial festgelegte Riemenscheibe (44) umfaßt, die eine einem profilierten Abschnitt der Welle (39) zugeordnete profilierte Bohrung aufweist und die infolge Längsverschiebung des Lagerkopfes (4, 5) auf der Welle (39) axial verschiebbar ist.

9. Maschine nach einem oder mehreren der vorhergehenden Ansprüche, dadurch gekennzeichnet, daß der Lagerkopf (4, 5) eine zentral durch den zapfenförmigen Fortsatz (25, 26) verlaufende Durchgangsbohrung aufweist, die Teile der Einrichtung (13, 14) zum Anbringen der Zentriermarke umgibt.

10. Maschine nach Anspruch 9, dadurch gekennzeichnet, daß in der Durchgangsbohrung eine Hülse (30) axial verschiebbar und drehfest gelagert ist, in der ein motorgetriebener Zentrierbohrer (31) drehbar gelagert und axial abgestützt ist.

## Claims

1. A machine for centring the balance of rotating bodies (40), particularly of crankshafts (10), having a machine bed (1), having two hearing heads (4, 5) for holding discs (6, 7) rotating synchronously and comprising receiving and adjusting devices (8, 9; 11, 12) for the rotating bodies (40) to be centred, which bearing heads are supported via springs (3) in relation to the machine bed (1) and are connected to one another to form an oscillating bridge (2), and having two devices (13, 14) which are arranged substantially behind the bearing heads (4, 5) in the longitudinal direction for making centring marks on the ends of the rotating body (40), characterised in that the bearing heads (4, 5) are connected to form an oscillating bridge (2) through at least one guide rail on which the bearing heads (4, 5), of which at least one is displaceable longitudinally, rest and are secured, that the springs (3) serving for the support are arranged between guide rail or guide rails (20, 21) and machine bed (1), and that bearing head (4, 5) and device (13, 14) for making the centring marks form a structural unit which is displaceable jointly.

2. A machine according to Claim 1, characterised in that the guide rail or the guide rails (20, 21) are disposed at one side of a plane through the axis of rotation of the holding discs (6, 7) preferably below the horizontal plane through the axis of rotation.

3. A machine according to one or both of the preceding Claims, characterised in that two guide rails (20, 21) are connected via transverse elements (22, 23) to form a frame (24) with supporting surfaces, preferably extending in a common horizontal plane, for the bearing heads (4, 5) constructed in the form of sliding carriages.

4. A machine according to Claim 3, characterised in that a preferably mechanical displacement device (37) for the jointly displaceable structural unit formed from bearing head (4, 5) and device (13, 14) for making the centring marks, is supported on the frame (24).

5. A machine according to any one or more of the preceding Claims, characterised in that both holding discs (6, 7) are driven by a common motor (38), the motor (38) being in working communication with the holding discs (6, 7) through a shaft (39) mounted on the transverse elements (22, 23) of the frame (24).

6. A machine according to Claim 5, characterised in that the shaft (39) is connected through belt drives (41, 42) on the one hand to the motor (38) and on the other hand to the holding discs (6, 7).

7. A machine according to any one or more of the preceding Claims, particularly according to Claim 6, characterised in that the holding disc (6, 7) has a hollow cylindrical portion whereby it is mounted for rotation on a journal-like extension (25, 26) of the bearing head (4, 5).

8. A machine according to Claim 7, characterised in that the belt drive (42) between shaft (39) and holding disc (6, 7) comprises a belt running surface in the form of a collar formed on the holding disc (6, 7) and an axially located belt pulley (4) mounted for rotation in the bearing head (4, 5), which belt pulley has a profiled bore associated with a profiled portion of the shaft (39) and is axially displaceable on the shaft (39) as a result of longitudinal displacement of the bearing head (4, 5).

9. A machine according to any one or more of the preceding Claims, characterised in that the bearing head (4, 5) has a through bore which extends centrally through the journal-like extension (25, 26) and surrounds parts of the device (13, 14) for making the centring marks.

10. A machine according to Claim 9, characterised in that mounted for axial displacement and held against rotation in the through bore is a sleeve (30) in which a motor-driven centre drill (31) is mounted for rotation and supported axially.

**Revendications**

1. Machine d'équilibrage de corps rotatifs (40), en particulier de vilebrequins (10), comportant un banc machine (1), avec deux têtes de palier (4, 5), soutenues vis à vis du banc machine (1) par l'intermédiaire de ressorts (3), reliées entre elles pour former un pont de vibration (2), pour des dispositifs d'enregistrement et de réglage (8, 9; 11, 12) tournant de manière synchrone, pour des disques d'enregistrement (6, 7), ainsi qu'avec deux dispositifs (13, 14), disposés en direction longitudinale, sensiblement derrière les têtes de palier (4, 5), servant à appliquer des marques de centrage aux extrémités du corps rotatif (40), caractérisée en ce que les têtes de palier (4, 5) sont reliées en formant un pont de vibration (2), par l'intermédiaire d'au moins une glissière de guidage, sur laquelle ou lesquelles reposent et sont fixées les têtes de palier (4, 5), dont au moins une est déplaçable longitudinalement, que les ressorts (3) servant à l'appui sont disposés entre la ou les glissière(s) de guidage (20, 21) et le banc machine (1), que la tête de palier (4, 5) et le dispositif (13, 14) servant à appliquer la marque de centrage forment un ensemble structurel déplaçable commun.

2. Machine selon la revendication 1, caractérisée en ce que la cu les glissières de guidage (20, 21) sont disposées sur la face d'un plan passant par l'axe de rotation des disques d'enregistrement (6, 7), de préférence au-dessous du plan horizontal passant par l'axe de rotation.

3. Machine selon une ou plusieurs des revendications précédentes, caractérisée en ce que deux glissières de guidage (20, 21) sont reliées par des éléments transversaux (22, 23) en formant un cadre (24) avec des faces d'appui, s'étendant de préférence dans un plan horizontal commun, pour les têtes de palier (4, 5) en forme de coulisseau.

4. Machine selon la revendication 3, caractérisée en ce que, sur le cadre (24), est appuyé un dispositif de déplacement (37), de préférence mécanique, pour l'ensemble structurel, déplaçable en bloc, formé de la tête de palier (4, 5) et du dispositif (13, 14) pour appliquer la marque de centrage.

5. Machine selon une ou plusieurs des revendications précédentes, caractérisée en ce que les deux disques d'enregistrement (6, 7) sont entraînés par un moteur (38) commun, le moteur (38) étant en relation fonctionnelle avec les disques d'enregistrement (6, 7), par l'intermédiaire d'un arbre (39) monté dans les éléments transversaux (22, 23) du cadre (24).

6. Machine selon la revendication 5, caractérisée en ce que l'arbre (39) est relié par une transmission à courroies (41, 42), d'une part au moteur (38) et d'autre part aux disques d'enregistrement (6, 7).

7. Machine selon une ou plusieurs des revendications précédentes, en particulier selon la revendication 6, caractérisée en ce que le disque d'enregistrement (6, 7) présente une partie cylindrique creuse, à l'aide de laquelle elle est monté à rotation sur un appendice (25, 26) en forme de tourillon de la tête de palier (4, 5).

8. Machine selon la revendication 7, caractérisée en ce que la transmission à courroie (42), entre arbre (39) et disque d'enregistrement (6, 7), comprend une surface de défilement de la courroie, réalisée en forme de collerette annulaire sur le disque d'enregistrement (6, 7), et un flasque de poulie, monté à rotation dans la tête de palier (4, 5), fixée axialement, qui présente un alésage profilé associé à une partie profilée de l'arbre (39) et qui est déplaçable axialement sur l'arbre (39), par suite du déplacement longitudinal de la tête de palier (4, 5).

9. Machine selon une ou plusieurs des revendications précédentes, caractérisée en ce que la tête de palier (4, 5) présente un alésage traversant, s'étendant centralement dans l'appendice (25, 26) en forme de tourillon, qui comprend des parties du dispositif (13, 14) pour appliquer la marque de centrage.

10. Machine selon la revendication 9, caractérisée en ce que, dans l'alésage traversant est montée une douille (30), déplaçable axialement et fixée en rotation, dans laquelle est monté à rotation et appuyé axialement un foret à centrer (31) entraîné par un moteur.

Fig. 1

Fig. 2